# EUROPEAN PATENT APPLICATION

(11) **EP 1 580 045 A1**
(43) Date of publication of application: **28.09.2005**
(21) Application number: 03812360.0
(22) Date of filing: 01.12.2003
(51) Int. Cl.: B60G 17/027

(54) **UPPER MOUNT**

(30) Priority: 29.11.2002 JP 2002348105
(71) Applicant: Sakamoto, Tutomu, Nagareyama-shi, Chiba 270-0112 (JP)
(72) Inventor: Sakamoto, Tutomu, Nagareyama-shi, Chiba 270-0112 (JP)
(74) Representative: Vossius & Partner
(86) International application number: PCT/JP2003/015340
(87) International publication number: WO 2004/050396

(57) **Abstract**

An upper mount (2) with which a vehicle height can be increased and reduced at any time using a vehicle-mounted existing fluid device (hydraulic device, for example) without using a dedicated fluid pressure mechanism such as a pneumatic device and without affecting suspension performance at all. The upper mount (2) is composed of a body-side member (4) fixed to a body (8) and a suspension-side member (6) fixed to (an upper end portion (38) of) a suspension.

The suspension-side member (6) is slidably installed to the body-side member (4) with a sealed space (28) formed between both members.

Fluid passage holes (oil passage holes) (18, 18) are made in the body-side member (4) from the outside. When fluid is supplied to the sealed space (28), the spacing between the suspension-side member (6) and the body-side member (4) is widened and a vehicle height can be increased.

## Description

### Technical Field

The present invention relates to an upper mount (including the concept of an upper sheet) interposed between a body and a suspension of a vehicle, and more particularly to a novel upper mount with which a vehicle height can be adjusted through a simple operation in the vehicle using a pressure of a fluid such as oil and air.

### Background Art

Although only about a century has passed since vehicles came to the world, their performances have undergone striking developments in the meantime. For instance, the development of engine performance is remarkable. Thus, in spite of the fact that vehicles in early days ran at several dozen km/h, even average passenger cars can nowadays run at 150 to 180 km/h.

However, it is not only engines that have developed. Other respective vehicular parts have also undergone marked developments. In particular, suspension performance has also undergone marked developments. This is because there is a demand to maintain high stability (running stability) despite speedup resulting from improvements in engine performance, and enhancement of suspension performance is required to meet that demand.

In other words, although a vehicle can move at a high speed with respect to a road surface, its tires are in contact with the road surface after all no matter how fast the vehicle is intended to move. To ensure running stability, namely, to maintain high stability, it is necessary to interpose suspensions between a body and the tires that are in direct contact with the road surface so that impacts received by the tires from the road surface can be absorbed by the suspensions, to keep the body stable while restraining the impacts to the utmost from being transmitted to the side of the body, and to improve suspension performance as well in accordance with improvements in engine performance.

Therefore, vehicles sold by auto manufacturers are superior not only in engine performance but also in suspension performance and exhibit high stability.

Incidentally, quite a few car enthusiasts do what is called lowdown, whichmeans enhancing stylishness (dressing up) by reducing a vehicle height as is the case with racing cars. According to the law as well, it is acceptable to reduce the vehicle height to some extent. Therefore, various forms of lowdown measures have been taken, including making appropriate improvements on vehicular suspensions sold by auto manufacturers and exchanging suspensions. These measures can be taken because respective auto manufacturers and automotive parts suppliers are actively engaged in the production and distribution of lowdown parts. Further, some suspensions mounted to vehicles are endowed themselves with a vehicle height adjusting function.

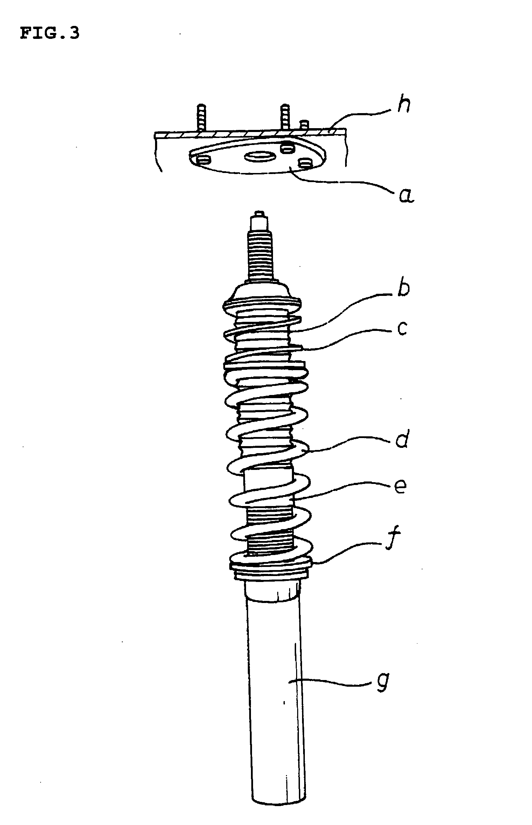

FIG. 3 separately shows, as to one conventional example of such a suspension, an upper mount mounted to an uppermost portion of the suspension. Referring to FIG. 3, the upper mount, which is mounted to the uppermost portion of the suspension and serves to fix the suspension to a body h, is denoted by a.

Respective portions of the suspension are denoted by b to g. A bump rubber is denoted by b. Although bottom strike tends to occur when a later-described shock absorber fully contracts, the bump rubber b serves to soften an impact caused at that moment. A helper spring, which is used accessorily to adjust a spring rate, namely, as a subsidiary spring for a later-described spring, is denoted by c. A spring, which absorbs an impact received by a tire from a road surface, is denoted by d. A shock absorber, which serves to quickly control an oscillation resulting from a reaction caused at the moment when the spring d absorbs an impact, is denoted by e.

A spring seat is denoted by f and referred to also as a lower seat. In the case of, for example, a suspension of a screw-driven vehicle height adjusting type, the spring seat can be increased or reduced in height by being screwed, unscrewed, or the like. More specifically, the vehicle height can be reduced (subjected to lowdown) as the spring seat f is raised. A shell case is denoted by g. Although bottom strike tends to occur when the shock absorber fully contracts, the shell case g serves to soften an impact caused at that moment. The body is denoted by h.

In the case of the suspension of the screw-drivenvehicle height adjusting type, the shock absorber and the spring may be integrated with each other (as shown in FIG. 3) or separated from each other. The suspension may be of various types including an air cushion type and an air suspension type.

Especially in these days, suspensions of the air suspension type have been drawing attention as those adapted for lowdown. The suspensions of the air suspension type are classified into those of an air bag type and those of a composite type. There are suspensions of an oil suspension type as well.

By the way, all the conventional suspensions endowed with the vehicle height adjusting function have unignorable drawbacks. First of all, in the case of suspensions of the screw-driven vehicle height adjusting type as shown in FIG. 3 and those of the air cushion type, the adjustment of a vehicle height requires opening a hood or removing tires, and a driver cannot increase or reduce the vehicle height while remaining in a driver seat.

Thus, there is a drawback in that once a vehicle has undergone lowdown, it must remain in that state wherever it goes. The present law permits performing lowdown to a certain height. This guarantees safety in traveling on highways and the like. However, a body of the vehicle may scratch a road surface or the like when the vehicle passes a greatly stepped spot while traveling on an open road, being put into a garage, dropping in at a filling station to be refueled, or the like.

Accordingly, the suspensions of the screw-driven vehicle height adjusting type and the air cushion type have a drawback in that the vehicle body may unavoidably scratch a road surface or the like.

On the other hand, in the case of those of the air suspension type or the oil suspension type, the vehicle height can be reduced or increased at any desired time by, for example, adjusting air or the like to be supplied to suspensions such as air bags using a dedicated device (air device), which is composed of an air tank, an air compressor, an air controller, and the like, or a dedicated device (hydraulic device), which is composed of an oil tank, an oil compressor, an oil controller, and the like. Thus, these suspensions make it possible to reduce the vehicle height in traveling on a highway or the like, and to increase the vehicle height in a situation where the vehicle body is assumed to scratch a road surface or the like, for example, when the vehicle enters an open road, is being put into a garage, or drops in at a filling station to be refueled, and can therefore be regarded as being considerably superior.

However, each of those of the air suspension type requires, in addition to a suspension such as an air bag or the like, a dedicated device composed of an air tank, an air compressor, an air controller, and the like, and each of those of the oil suspension type requires, in addition to a suspension, a dedicated device (hydraulic device) composed of an oil tank, an oil compressor, an oil controller, and the like. Thus, they have an unignorable drawback in considerable expensiveness.

Furthermore, an air pressure or an oil pressure is constantly applied to each of the existing suspensions of the air suspension type and the oil suspension type. In quite a few cases, therefore, an O-ring or the like falls off. Accordingly, air in, for example, an air bag or the like leaks out, and the suspension is crushed. When the suspension is thus crushed, the vehicle height is thereby reduced further as a matter of course. Especially in the case where the suspension is of a springless type, the vehicle height may be reduced until the body scratches a road surface. If this sort of trouble happens while a vehicle is traveling at a high speed on an expressway or the like, it follows not only that the vehicle brings about an accident but also that many other vehicles may be involved in the accident to cause a major catastrophe.

As described hitherto, the conventional lowdown art is generally structured to adjust a vehicle height by changing a length of the suspension, and the length of the suspension changes due to a change in the vehicle height, which affects the state or characteristic of the suspension. Therefore, in order to maintain high stability (running stability) after lowdown as well, it is not sufficient to use a suspension adapted for lowdown. Other suspension-related mechanisms, parts, and the like to be used, for example, mechanisms, parts, and the like for fixing the suspension to tires, must also be adapted for lowdown. This also constitutes a factor in an increased lowdown cost.

It is therefore an object of the present invention to provide an upper mount that utilizes an on-vehicle fluid pressure device (e.g., a hydraulic device) without using a dedicated fluid pressure mechanism such as an air device, a hydraulic device, or the like, and that allows a vehicle height to be increased or reduced at any time without affecting suspension performance at all.

### Disclosure of the Invention

To attain the above object, an upper mount of claim 1 including a body-side member fixed to a body and a suspension-side member fixed to a suspension is characterized in: that the suspension-side member is formed slidably mounted to the body-side member with a sealed space formed between the suspension-side member and the body-side member; that the body-side member is provided with a fluid passage hole for supplying a fluid to the sealed space from outside and another fluid passage hole for discharging the fluid from the sealed space; and that a spacing from the body-side member to the suspension-side member is widened by supplying the fluid to the sealed space so that a vehicle height can be increased.

Thus, according to the upper mount of claim 1 described above, when the spacing between the body-side member and the suspension-side member of the upper mount is widened by supplying a fluid (e.g., oil) into the sealed space from the fluid passage hole against the weight of the body side, the vehicle height can be increased by an amount corresponding to the increase in width.

When the fluid is stopped frombeing supplied against the weight of the body side, the fluid in the sealed space is discharged from the sealed space to the outside through the fluid passage hole due to the weight of the body side, and the spacing from the body-side member to the suspension-side member is reduced. Consequently, it is possible to reduce a vehicle height, that is, to realize a lowdown state.

In a normal lowdown state, there is no fluid (e.g., oil) in the sealed space, and no fluid pressure is applied to the suspension-side member and the body-side member. Accordingly, a degree of deterioration caused in a sealed- state maintaining portion (e.g., an O-ring or the like) through constant application of a pressure can be drastically reduced in comparison with a suspension of an air suspension type to which a pressure is continuously applied in the normal state, or the like. As a result, prolongation of life is made possible. Thus, the degree of deterioration is lower than that of the suspension of the air suspension type, and prolongation of life is made possible.

Moreover, when the fluid is supplied to the upper mount according to the present invention, it is supplied simply to the sealed space between the body-side member and the suspension-side member. Therefore, no influence is exerted on the performance and characteristic intrinsic to the suspension to be mounted. Thus, the present invention is suitable for any type of suspension. There is no possibility that running stability decreases due to lowdown, and there is no need to change the characteristic or performance of the suspension or replace relevant mechanisms including a mechanism for mounting the suspension to tires. This also constitutes a factor in a reduced lowdown cost.

In the upper mount according to claim 1, the upper mount of claim 2 is characterized in having a stopper for limiting a spacing from the body-side member to the suspension-side member to a certain value.

Thus, according to the upper mount of claim 2, the spacing from the body-side member to the suspension-side member can be limited to the certain value by the stopper. Therefore, the change range of a vehicle height (stroke) can be defined as a predetermined length.

In the upper mount according to claim 1 or 2, the upper mount of claim 3 is characterized in that the fluid is supplied to the sealed space from a pump of a fluid pressure mechanism built in the vehicle through the fluid passage hole via a fluid pipe having an electromagnetic valve, and in that the fluid in the sealed space is caused to flow backward to the pump from the fluid passage hole through the fluid pipe.

Thus, according to the upper mount of claim 3, the vehicle height can be adjusted by operating the electromagnetic valve utilizing the fluid pressure mechanism built in the vehicle, and no dedicated fluid pressure mechanism for vehicle height adjustment is required.

Therefore, the price required in carrying out lowdown while enabling vehicle height adjustment can be remarkably reduced in comparison with the case of an air suspension or an oil suspension.

### Brief Description of the Drawings

FIG. 1 (A) and FIG. 1 (B) show a first embodiment of the present invention. FIG. 1(A) is an exploded perspective view. FIG. 1(B) is a sectional view taken along a line A-A' in FIG. 1(A).
FIG. 2 is a schematic explanatory diagram of a fluid pressure mechanism (power steering hydraulic mechanism) of the aforementioned first embodiment.
FIG. 3 is a side view showing a suspension as a conventional example.

### Best Mode for Carrying out the Invention

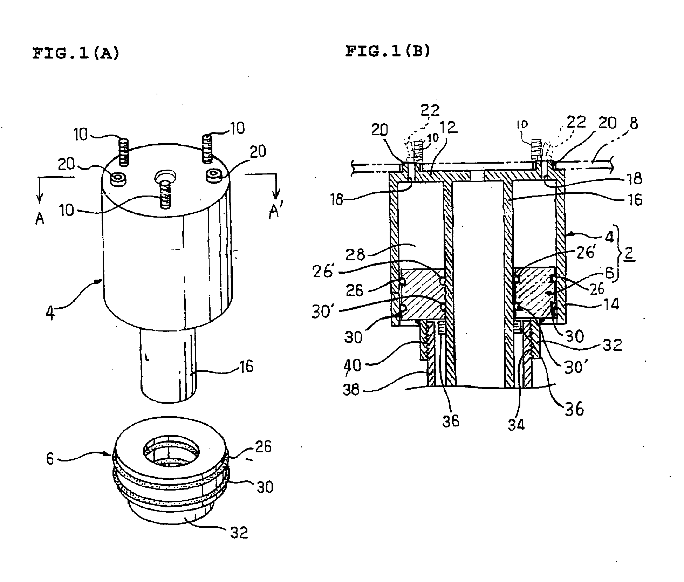

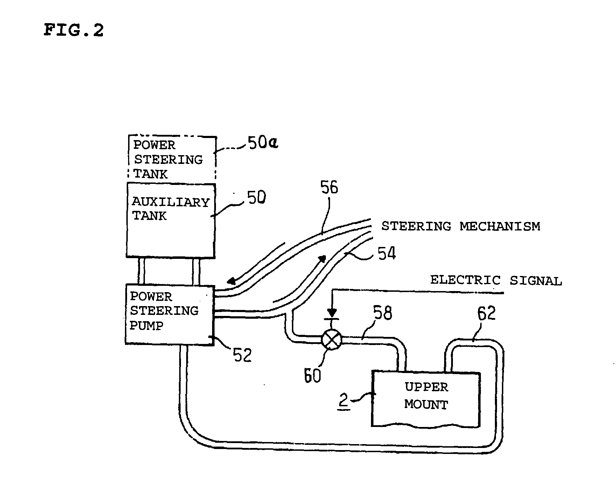

The following description will be made based on an embodiment illustrating the details of the present invention. FIGS. 1(A) and 1 (B) show one embodiment of an upper mount of the present invention. FIG. 1(A) is an exploded perspective view. FIG. 1(B) is a longitudinal sectional view taken along a line A-A' in FIG. 1(A) FIG. 2 is a view showing a hydraulic mechanism as a fluid pressure mechanism that supplies the upper mount with oil as a fluid.

First, the embodiment of the upper mount of the present invention will be described with reference to FIGS. 1(A) and 1(B) .

The upper mount, which is composed of a body-side member 4 and a suspension-side member 6, is denoted by 2. The body-side member 4 is fixed to a body 8. A plurality of screws, which are so fixed to the body-side member 4 as to be protruded vertically from its upper face in order to fix the body-side member 4 to the body 8, are denoted by 10, 10.

The body-side member 4 has an outer tube portion 14 and an inner tube portion 16. The outer tube portion 14 protrudes vertically downwards from a peripheral edge of a disc portion 12 as the upper face of the body-side member 4. The inner tube portion 16 is formed inside the outer tube portion 14, protruding concentrically therewith and vertically downwards from a face of the disc portion 12. The disc portion 12 is provided with two oil passage holes (which correspond to fluid passage holes in the claims) 18 communicating with a space between the outer tube portion 14 and the inner tube portion 16. Each of pipe couplers for fixing pipes 22 communicating with the oil passage holes 18 is denoted by 20.

The suspension-side member 6 is doughnut-shaped and thus advantageous in being reduced in thickness and being coupled to a spring. An outer diameter of the suspension-side member 6 is slightly smaller than an inner diameter of the outer tube portion 14 of the body-side member 4, and an inner diameter of the suspension-side member 6 is slightly larger than an outer diameter of the inner tube portion 16. The suspension-side member 6 is slidably fitted in a region between the outer tube portion 14 and the inner tube portion 16. Airtightness maintaining ring-shaped packing materials (O-rings), which are provided respectively on an outer peripheral face and an inner peripheral face of the suspension-side member 6 and serve to maintain airtightness in a sealed space 28 formed between the suspension-side member 6 and the body-side member 4, are denoted by 26, 26'. Waste entry preventing ring-shaped packing materials (O-rings), which are provided slightly lower than the airtightness maintaining ring-shaped packing materials 26, 26' on the outer and inner peripheral faces of the suspension-side member 6 and serve to prevent waste from entering the sealed space 28 from the outside, are denoted by 30, 30'.

A suspension mounting tube provided cylindrically on a lower face of the suspension-side member 6 is denoted by 32. The suspension mounting tube 32 has a diameter that is larger than the outer diameter of the inner tube portion 16 of the suspension-side member 6 by an appropriate value. A suspension mounting thread 34 is formed on an inner peripheral face of the suspension mounting tube 32.

A stopper for the suspension-side member 6 is denoted by 36. This stopper, which is intended to ensure sliding movements of the suspension-side member 6 between the outer tube portion 14 and the inner tube portion 16 of the body-side member 4, is fixed on the inner tube portion 16 at a position barely inside the space 28 and defines a moving stroke of the suspension-side member 6 as a predetermined distance. Thus, the suspension-side member 6 is movable between a position where its upper face is in contact with the disc portion 12 of the body-side member 4 and a position where its lower face is engaged with the stopper 36. This moving stroke is set in advance to, for example, 10 cm. This moving stroke directly represents a range allowing to change the height of a vehicle (vehicle height changing range).

A tubular mounting portion forming an upper end portion of a suspension (not shown) is denoted by 38. A mounted screw 40, which is screwed into the suspension mounting thread groove 34 in the inner peripheral face of the suspension mounting tube 32, is formed on an upper outer peripheral face of the mounting portion 38. By screwing the screw 40 into the thread 34, the suspension (not shown) is fixed to the suspension-side member 6 of the upper mount 2. It is not absolutely necessary to fix the suspension to the suspension-side member 6 of the upper mount 2 in this manner. Any means is employable as long as it is high in strength and slack-free.

Since the suspension fixed to the suspension-side member 6 of the upper mount 2 may be of any type, no concrete example thereof is mentioned above. For example, the suspension of the type shown in FIG. 3 may be used. Needless to say, however, the upper mount 2 shown in FIG. 1 is used instead of an upper mount a.

In this embodiment, the suspension-side member 6 has a doughnut-like contour and the inner tube portion 16 of the body-side member 4 is slidably fitted in a center hole of the suspension-side member 6. However, this construction is not indispensable. For example, the suspension-side member may assume, for example, a disc-like shape instead of a doughnut-like shape and be slidably mounted in a state of being fitted in the tubular body-side member.

Furthermore, the suspension-side member 6 may be made of a metal with a thickness of, for example, several millimeters and assume a doughnut-like shape when viewed from above, but be so formed as to have an inner tube portion and an outer tube portion as is the case with the inner tube portion 16 and the outer tube portion 14 of the body-side member 4. In this case, an upper end portion of a coil spring of a suspension may be fitted between the inner tube portion and the outer tube portion. In this manner, the suspension-side member 6 may assume various forms.

Next, the hydraulic mechanism will be described with reference to FIG. 2. In this embodiment, a power steering drive mechanism as a hydraulic mechanism for steering drive is employed as the hydraulic mechanism. A power steering tank, in which hydraulic oil is stored, is denoted by 50. A power steering pump, which supplies a steering mechanism (not shown) with oil from the tank 50 by applying a required pressure, is denoted by 52. Pipes connecting the steering mechanism and the pump 52 together are denoted by 54, 56. A pipe branching off from one of the pipes 54, 56, namely, the pipe 54 is denoted by 58. A leading end of the pipe 58 is so fixed to the pipe coupler 20 as to communicate with one of the oil passage holes 18 of the upper mount 2. The pipe 58 serves as a passage for supplying oil from the power steering pump 52 to the upper mount 2.

An electromagnetic valve mounted to the pipe 58 is denoted by 60. The electromagnetic valve 60 can be controlled to be opened and closed by a switch (not shown) that is provided at an operable position in, for example, a driver seat. A pipe, which is so fixed at one end thereof to the pipe coupler 20 as to communicate with the other oil passage hole 18 of the upper mount 2 and is connected at the other end thereof to the power steering pump 52, is denoted by 62. The pipe 62 serves as a passage for causing oil in the sealed space 28 of the upper mount 2 to flow backward to the power steering pump 52.

In this embodiment, the power steering hydraulic mechanism is utilized as a fluid pressure mechanism for supplying the sealed space 28 with oil as a fluid. However, this is not obligatory. Another hydraulic mechanism may be utilized instead or provided independently from the power steering hydraulic mechanism. Alternatively, a fluid pressure mechanism utilizing air as a fluid instead of oil may be employed.

Next, an operation of the upper mount 2 will be described.

### (1) When the vehicle is in a normal state (lowdown state)

When the vehicle is in the normal state, the electromagnetic valve 60 is kept closed. In this state, no oil is supplied from the power steering pump 52 to the upper mount 2, and the weight of the vehicle (the weight of the body side) is applied to the suspension-side member 6 via the body-side member 4 of the upper mount 2. Thus, due to the weight, oil in the sealed space 28 of the upper mount 2 has been discharged to the pump 52 through the pipe 62. Therefore, there is no sealed space 28 (whose volume is substantially 0) and the disc portion 12 of the body-side member 4 is in contact with the suspension-side member 6. In this state, the vehicle height is at its minimum. For instance, the height of the vehicle above the ground is at its minimum.

In this normal state, the vehicle runs on a road whose road surface is not or hardly bumpy or stepped, for example, on an expressway or a highway.

As described above, when the vehicle is in the normal lowdown state, there is no fluid (e.g., oil) in the sealed space, and no fluid pressure is applied to the suspension-side member or the body-side member of the upper mount 2. Accordingly, a degree of deterioration caused in a sealed-state maintaining portion (e.g., an O-ring or the like) through constant application of a pressure can be drastically reduced in comparison with a case where a pressure is continuously applied in the normal state. As a result, prolongation of life is made possible.

Thus, the degree of deterioration in the sealed-state maintaining portion is lower than that of an air suspension type or an oil suspension type, and prolongation of life is made possible.

### (2) When the vehicle is at a great vehicle height

When the electromagnetic valve 60 is opened by operating the switch, the vehicle height is increased. In other words, when the electromagnetic valve 60 is opened, oil is supplied, owing to a pressure acting against the weight of the vehicle, from the power steering pump 52 into the sealed space 28 of the upper mount 2 through the pipes 54, 58. Consequently, the sealed space 28 is enlarged, the spacing between the disc portion 12 of the body-side member 4 of the upper mount 2 and the suspension-side member 6 is widened, and the vehicle height is increased. This operation of increasing the vehicle height is stopped when the suspension-side member 6 is engaged with the stopper 36.

Through this operation, the vehicle height is increased by a stroke of the suspension-side member 6. If the stroke is 10 cm for example, the vehicle height is 10 cm higher than a vehicle height at the time when the vehicle is in the lowdown state (a minimum height above the ground).

Thus, when the vehicle is about to run on a road having considerably bumpy or greatly stepped road surface or when the vehicle must pass through a considerably bumpy or greatly stepped spot to be refueled at a filling station, to be parked in a parking lot or the like, or to be put into a garage, the vehicle height is increased by opening the electromagnetic valve 60 in advance, whereby it is possible to prevent the vehicle body from encountering a trouble of scratching the road surface.

In returning the vehicle to the normal state, the vehicle height is reduced as described in (1) by closing the electromagnetic valve 60 through an operation of the switch.

### Industrial Applicability

The present invention described above makes it possible to provide an upper mount that utilizes an existing fluid pressure device (e.g., a power steering hydraulic device) without using a dedicated fluid pressure mechanism such as an air device, a hydraulic device, or the like, and that allows a vehicle height to be increased or reduced at any time without affecting suspension performance at all.

## Claims

1. An upper mount comprising a body-side member fixed to a body and a suspension-side member fixed to a suspension, **characterized in that**:
the suspension-side member is formed in a doughnut-like shape and slidably mounted to the body-side member with a sealed space formed between the suspension-side member and the body-side member;
the body-side member is provided with at least one fluidpassage hole for supplying a fluid to the sealed space from outside and at least another fluid passage hole for discharging the fluid from the sealed space; and
a spacing of the sealed space of the suspension-side member is made changeable by supplying the fluid to the sealed space.

2. An upper mount according to claim 1, **characterized in that** a stopper that makes the spacing of the sealed space constant is provided on the body-side member.

3. An upper mount according to claim 1 or 2, **characterized in that** the fluid is supplied to the sealed space from a fluid pressure mechanism provided in a vehicle through the one fluid passage hole via a fluid pipe due to a pump operation performed by opening an electromagnetic valve, and **in that** the fluid in the sealed space is caused to flow backward to the fluid pressure mechanism from the another fluid passage hole by closing the electromagnetic valve.
